Europäisches Patentamt

**European Patent Office**

**Office européen des brevets**

(19)

(11) Publication number: **0 043 111**

**A2**

# (12) EUROPEAN PATENT APPLICATION

(21) Application number: **81104930.3**

(22) Date of filing: **25.06.81**

(51) Int. Cl.³: **E 02 B 15/04**
**B 63 B 35/32**

(30) Priority: **28.06.80 GB 8021290**

(43) Date of publication of application:
**06.01.82 Bulletin 82/1**

(84) Designated Contracting States:
**AT BE CH DE FR GB IT LI LU NL SE**

(71) Applicant: **CLEANSEAS OIL POLLUTION CONTROL LIMITED**
**Mercantile House 99 St. Leonards Road**
**Windsor, Berks. SL4 3BS(GB)**

(72) Inventor: **Atkinson, Ian**
**c/o Mercantile House 99 St. Leonards Road**
**Windsor, Berkshire, SL4 3BZ(GB)**

(74) Representative: **Denmark, James**
**c/o Bailey Walsh & Co. 5 York Place**
**Leeds LS1 2SD Yorkshire(GB)**

(54) Oil recovery vessel.

(57) The invention provides that fishing trawlers which are no longer required for fishing, be converted in that the fish room is converted into oil collection tanks, and the vessel has means for sucking oil from an oil slick on the sea. The vessel is therefore dedicated for the specific use of oil recovery and can be kept at the ready to deal with recovery of oil of an oil spill as soon as the spill takes place.

-1-

This invention relates to the recovery of oil spilt at sea.

The problems caused by the spillage of oil from sea going vessels are well known. Floating oil which is washed ashore spoils the environment and kills fish and birds, and disposal of the oil after it has reached the shore is extremely difficult. The present invention is concerned with providing a means for the effective handling and recovery of what are known as "oil slicks" or oil spills being volumes of oil spilt at sea from sea going vessels, such as large super tankers.

Various devices and apparatus have been conceived for the recovery of oil from oil slicks, but the problem still persists and a truly effective means of handling the oil and disposing of same has not been provided. Many Government organisations and research bodies continue to work in an effort to solve the oil recovery problem.

The present invention is a proposal for a solution for dealing quickly and effectively with oil slicks. Initial tests using prototype equipment indicate to us that the present invention has considerable merit and constitutes an improvement over the existing systems of which we are aware.

In accordance with the present invention we provide a vessel which is dedicated to the recovery of oil from oil slicks, which vessel comprises an ocean going fishing trawler which has been converted in that the fish hold is provided with a plurality of tanks for the recovered oil, and the vessel also has means for sucking oil from the sea and for charging it into said tanks.

The vessel is a converted fishing vessel for collecting oil but can be made multi-purpose by being provided with dispersant tanks and dispersant spraying or jetting means, so that the vessel can switch its function from a recovery operation which is drawing in oil from the oil slick, to an oil dispersing function which is breaking up the oil on the sea surface, by the use of the chemical dispersant.

It is preferred that the chemical dispersant will be sprayed onto the oil slick surface from the bow of the vessel, but if desired, alternatively or additionally, the dispersant may be sprayed from the stern of the vessel. The spraying or jetting of dispersant to break up the oil slick would be carried out normally when the sea is too rough to perform the recovery operation using the means for drawing in the oil from the slick, but if conditions permit, a recovery operation would take place.

The vessel may be provided with a lateral boom to one or to each side of the vessel, the or each boom having connected thereto what is known as a "troilboom", which is an elongated flexible retention member or skirt which floats on the surface of the water, and takes up a U-configuration trailing behind the boom with the open end of the U facing forwards, so that with advancing movement of the vessel, the oil slick flows into the open end of the U and is collected by the skirt, and in this regard the skirt acts much like a collecting pen. By matching the forward speed of the vessel, as related to the width of the opening of the troilboom, and the volume of oil in the slick, so the oil suction means can be arranged to suck oil from the inside of the skirt at the same rate at which it collects in said skirt, so that there will be little or no accummulation of oil in the skirt. When the skirt is not in use, it can be folded to a flat position along the side of the vessel or swung inwards and upwards onto the deck.

The oil drawn from the skirt is preferably passed through a filter in order to filter out heavy floating debris, and then the oil is passed to the said oil storage tanks into which the oil can be charged in sequence, and in a fashion to give best buoyant stability to the vessel. Once in the said tanks, the oil and any water thereon will separate, and the separated water can be extracted by an extraction pump and discharged over the side of the vessel, into the open mouth of the skirt, so that any oil which is withdrawn with the extracted water, will be put back into the recovery cycle, whereby maximum recovery can take place.

Preferably, each oil tank in the vessel will include heating means for the heating of the oil, in order to lower its viscosity, to enable it more easily to be pumped from the said tanks into, for example on shore tanks or an adjacent floating oil barge. Each tank may also be provided with a scraper, which is displaceable horizontally through the tank, in order to displace oil towards a suction outlet by which the oil is extracted from the tanks at the appropriate time.

The said means for spraying or jetting the chemical dispersant may comprise a pair of booms at the bow of the vessel, with appropriate pump means for drawing the dispersant from the storage tanks in the vessel, as and when desired. The dispersant may be used when the sea is too rough for oil recovery, and, whilst the vessel is steaming at a higher speed than it would be in normal collection using the troilbooms. By arranging for the dispersant to be sprayed from the bow of the vessel into the front wake, a more effective dispersing of the oil slick is achieved, because the oil and water at the bow of the ship is in a highly agitated emulsified condition. The chemical dispersant which is used is preferably diluted detergent, and of conventional type.

There are many substantial advantages in using a converted fishing trawler including that there are many trawlers which because of age or because of economics are no longer required, and can be purchased cheaply. Also, the vessel can be completely dedicated to oil recovery so that it can be put into immediate use in the event of oil spillage. Further trawlers are very flexible vessels in that they can steam at high speed or crawl comfortably at low speed, which are extremely suitable features for oil recovery using a dedicated vessel. Further still, trawlers are ocean going and therefore can go to any oil spillage area.

In an alternative form of construction means for recovering the oil instead of having a flexible skirt may be provided as what is sometimes referred to as a "sea skimmer" which is an oil recovery device suspended from a lateral boom. A sea skimmer is normally used when a slick of oil is contained by means of a retention boom, held for example by two vessels. In such a case, the vessel according to the invention would berth alongside the edge of the retained slick, and the sea skimmer would be lowered into the slick, and operated for the recovery of the oil. If necessary, the preferred vessel according to the invention can perform an oil dispersing function in relation to such a retained oil slick.

When a vessel according to the invention is used in relation to a large oil slick, it may be used along with a similar vessel, and also with a storage barge, with the barge being moored at a short distance from the oil slick, so that the said vessels can ferry between the oil slick and barge, whereby minimum time is wasted in the return of each vessel to the oil slick to carry on with the recovery operation, after the discharge of the recovered oil from the vessel into the barge. This concept is novel as compared to the known methods of oil recovery.

It will be readily understood that the invention provides an important and valuable development in the field of oil recovery.

An embodiment of the invention will now be described, by way of example with reference to the accompanying drawings, wherein:

Fig. 1 is a partial sectional side elevation of a trawler which has been converted in accordance with the present invention;

Fig. 2 is a plan view of the trawler shown in Fig. 1;

Fig. 3 is a sectional side elevation of the portion of the trawler which previously was the fish room;

Fig. 4 is a sectional plan view of the section of the trawler shown in Fig. 3; and

Figs. 5, 6 and 7 are respectively a side view and plan views of the forward section of the trawler shown in Fig. 1, to illustrate the hydraulic connections for circulating and discharging the oil and the recovery tanks.

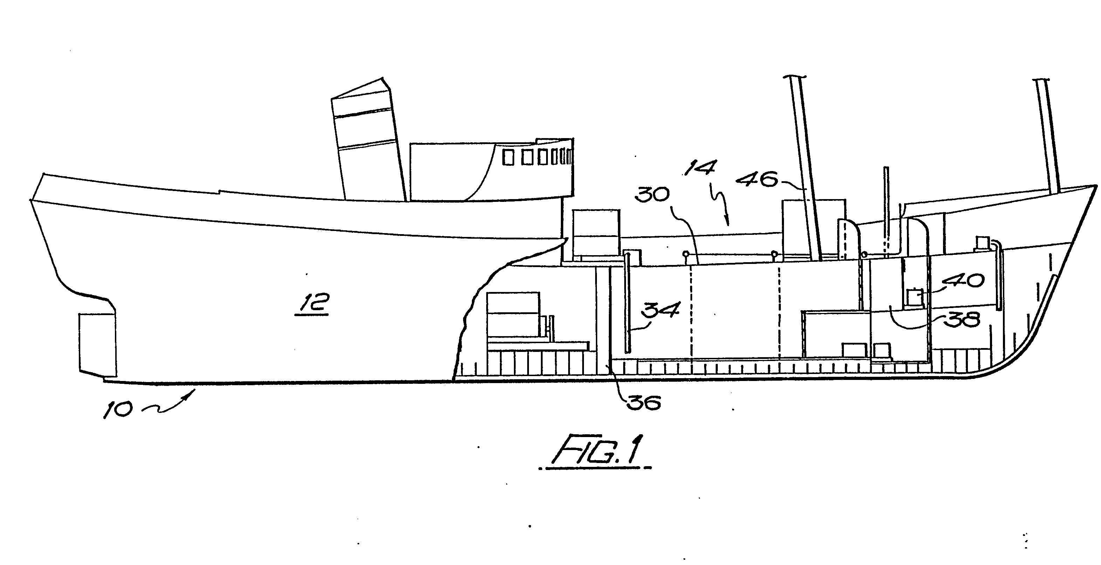

Referring to the drawings, the trawler shown in Fig. 1 is indicated by numeral 10, and the section 12 contains the engine room and crew quarters. The forward section 14 is converted in accordance with the present invention, in order to define six oil storage tanks 16, 18, 20, 22, 24 and 26 which are arranged symmetrically to each side of a central walkway 28. The volume occupied by the tanks 16 to 26 in the walkway 28 previously was the fishroom of the trawler. It should also be mentioned that the trawler is stripped of its trawling gear, as the conversion according to this invention makes the vessel a special purpose or recovery vessel.

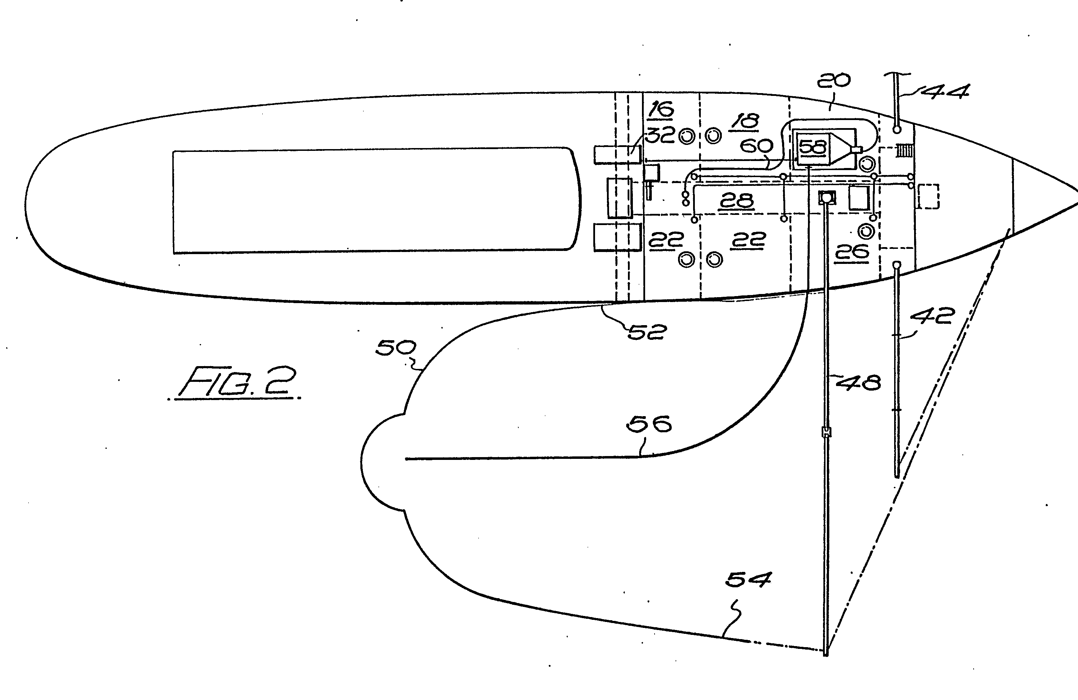

The decking covers the tanks 16 to 26, and central walkway 28, the decking being illustrated by numeral 30 in Fig. 1, and the central walkway is adapted to be pressurised by means of a fan 32 and a pressurising pipe 34 which extends from the deck mounted fan 32 into the central walkway 28. Fig. 1 shows the cofferdam 36 of the vessel, and forward of the tanks 20 and 26 there is provided a dispersant tank 38 for containing liquid oil dispersant. Pump 40 is for pumping the dispersant from the tank 38 to two pivotable dispersants spray booms 42 and 44, which in the in use position extend over the sides of the vessel as shown in Fig. 2 for the spraying of dispersant onto oil on the sea surface under certain conditions as will be explained herein.

From a mast 46 there extends over the starboard side of the vessel, a support boom 48, which supports a trailing skirt member 50 of flexible construction. The skirt member has one end 52 connected to the starboard side of the vessel, whilst the other end 54 is connected to the outer extremity of the boom 48, whereby the flexible skirt 50 takes up a U-configuration with the open side facing in the direction of travel of the vessel. As the vessel moves forward, so the oil of a oil spill can be collected in the skirt 50. The suction hose 56 is in use as shown in Fig. 2 located in the U formed by the skirt 50, and is connected to an oil receiving tank 58 having a suction pump which draws the oil, and possibly some sea water, through the hose 56, and then discharges it through a discharge line 60 into the said tanks 16 to 26 in a suitable sequence in order to maintain the ballasting of the vessel.

If desired, there may be two of the said booms 48 and two skirts 50, the other boom and skirt being located to the portside of the vessel.

The trawler is principally converted to be a dedicated oil recovery vessel, but the dispersant tank 38 and the sprays 42 are provided to give the vessel greater flexibility in that if it is unsuitable for the collection and recovery of oil, for example if the sea is too rough, then it may be more appropriate to use the dispersant sprays in order to disperse the oil rather than to recover same. There is advantage is mounting the dispersant sprays to the bow end of the vessel, because it is ensured that the dispersant will be applied to the oil before it passes the vessel.

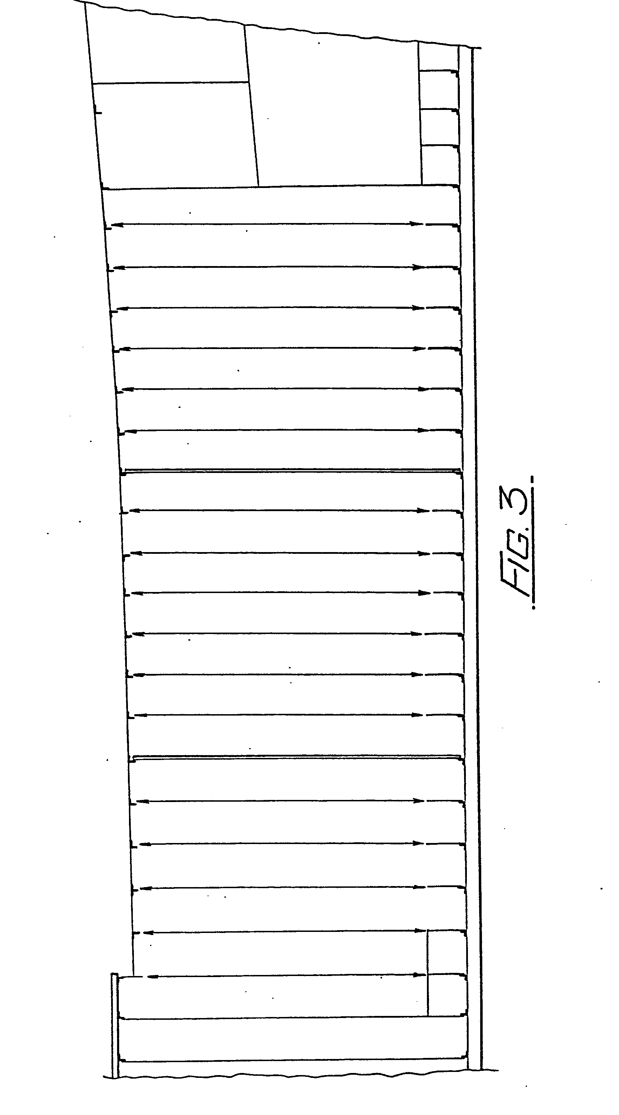

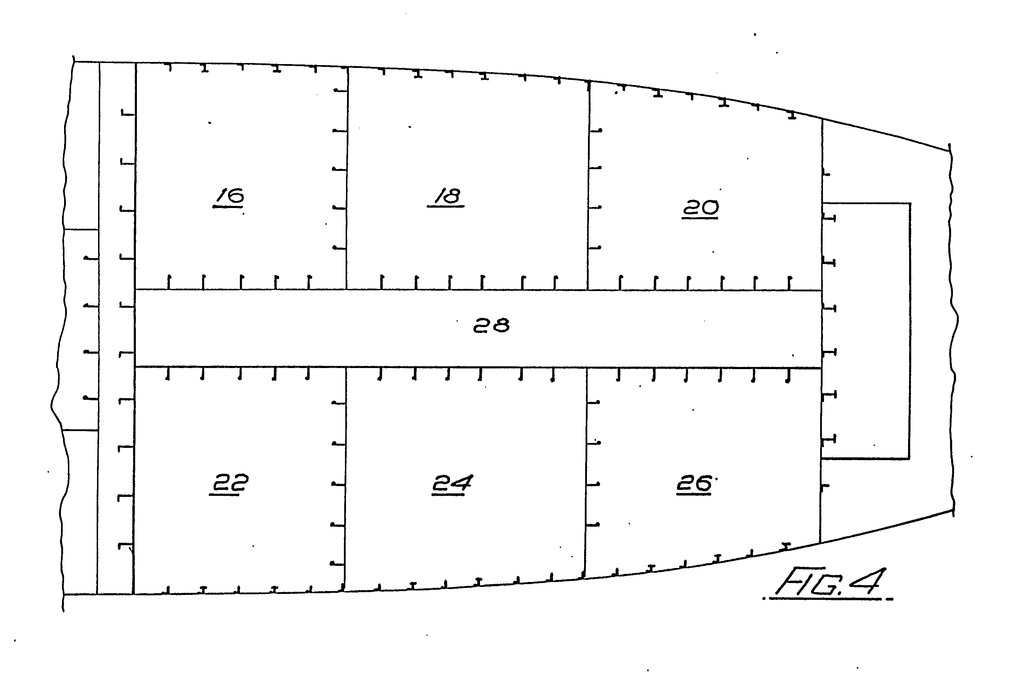

The arrangement of the oil tanks 16 to 26 is shown more clearly in Figs. 3 and 4, and it should be mentioned that the tanks may be arranged to have weirs so that when oil and water are supplied to the tanks, and the water settles out from the oil, the oil will be capable of flowing over a weir into an oil collection region.

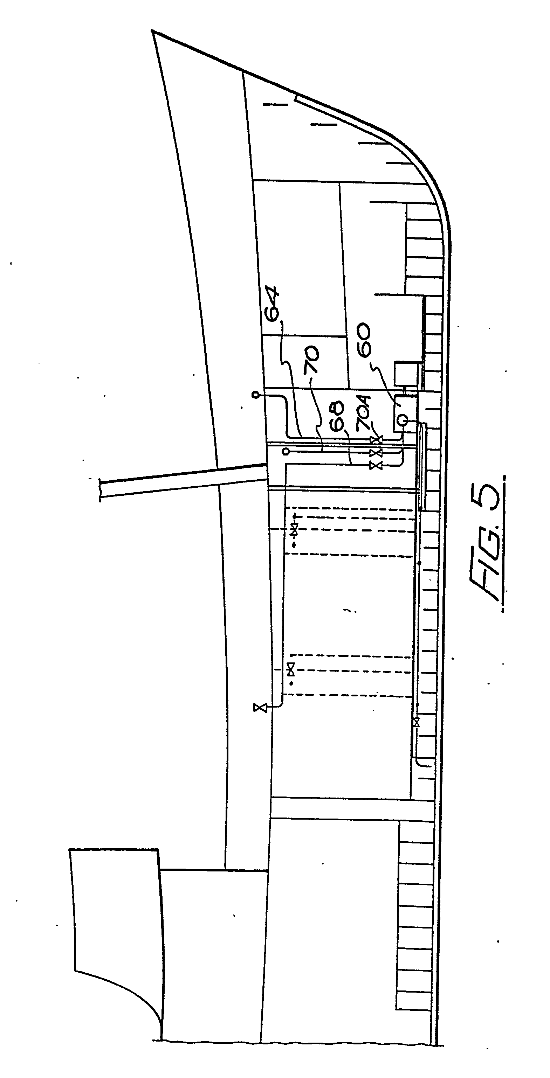

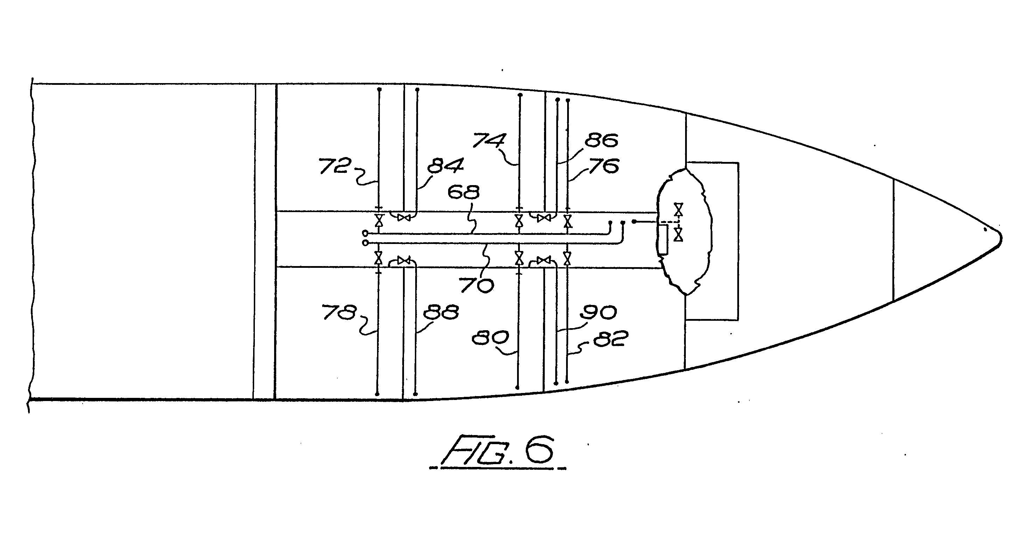

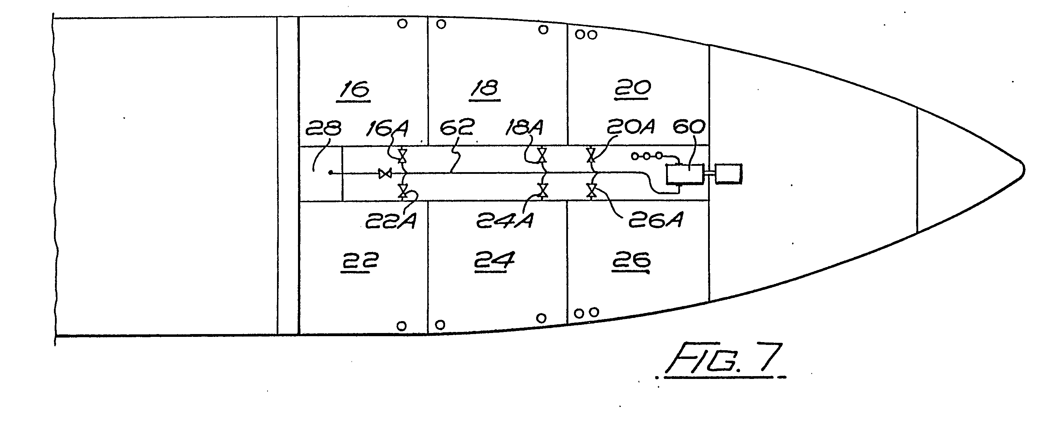

Figs 5, 6 and 7 show the means for circulating the oil, and as shown in Fig. 5, there is a circulating pump 60 which, as shown in Fig 7, can draw oil from the bases of the tank 16 to 26 through valves 16A to 26A, and also from the well of the central walkway 28, through a pipe 62. The oil thus sucked in by the pump 60 can either be discharged through a line 64 over the edge of the vessel, for example to onshore storage tank, or can be discharged through return lines 68 and 70 rear valves 68A and 70A, to the port and starboard tanks respectively, through branch lines 72, 74 and 76 for the port tanks, and 78, 80 and 82 for the starboard tanks. Coupling lines 84, 86, 88 and 90 permit the adjacent tanks to be coupled as shown in Fig. 6 for the transference of oil between the tank.

Although not shown in the drawings, it is peferred that the tanks be provided with selectively operable heating means in order to lower the viscosity of the oil, for example to make it easier to discharge from the tanks when the vessel eventually reaches a discharge point.

The operation of the vessel will be clearly understood, but it is to be pointed out that the vessel it is envisaged will perform much the same function as a fire engine. In other words, it will be dedicated specifically to oil recovery so that as soon as there is a oil spillage at sea, then the vessel will be ready to sail to the spillage and deal with same with the minimum loss of time. At present there is no facility such as this for the dealing with oil spillages.

There is considerable advantage in converting trawlers, because there are currently many trawlers which because of age or economics are no longer required for fishing, and the conversion according to the present invention will provide a new and effective use for such vessels. Secondly the trawler is an extremely flexible vessel in that it can sail at high speed, or at a very slow speed at will, and it is also very manoeverable, which characteristics are extremely desirable in an oil recovery operation. Typically, a trawler will be capable of recovering 200 tons of oil spillage, and this capacity should be sufficient to deal with the majority of cases of oil spillages.

It is to be pointed out that the vessel will carry certain standard equipment, which has not been described. For example, a suitable filtering arrangement will be proided for filtering the oil which is drawn from the sea, and the vessel may be provided with safety rowing boats.

Should the vessel require to deal with very large oil slicks, it can be used in conjunction with a floating barge into which it would charge its contents when full, the barge being moored a few miles from the oil slick, so that the vessel could steam back and forth in completing the recovery of the operation.

When the vessel is travelling to an oil spill or returning from an oil spill, the booms and spray bars 48, 42, and 44 will be pivotted so as to lie on a fore and aft direction of the vessel.

CLAIMS

1. A vessel which is dedicated to the recovery of oil from oil slicks, which vessel comprises an ocean going fishing trawler which has been converted in that the fish room is provided with tanks for the recovered oil, and the vessel is provided with means for sucking in oil from the sea and for charging it into said tanks.

2. A vessel according to claim 1, wherein there are oil tanks port and starboard of the vessel, to each side of a central walkway.

3. A vessel according to claim 2, wherein the central walkway is adapted to be pressurised and the vessel includes a pump for the pressurising the central walkway.

4. A vessel according to claim 1, 2 or 3, wherein the means for sucking in oil comprises a suction pump and a suction hose for trailing on the surface of the sea, the vessel further including a boom with a collecting skirt for collecting the sea floating oil as the vessel progresses, the said suction hose being for location within the skirt.

5. A vessel according to any preceding claims, wherein each oil tank has heating means for varying the viscosity of oil collected, for example for the discharge of the oil from the tanks when required.

6. A vessel according to any one of the preceding claims, wherein the vessel is equipped with a detergent tank for liquid detergent, and spraying means for spraying detergent on oil slicks if appropriate.

7. A vessel according to claim 6, wherein the spraying means comprises at least one spray boom on the bow of the vessel which is swingable to a spraying position
in which the spray boom overhangs the sides of the
vessel.

_FIG.1_

10

12

30  14  46

34

36

40

38

FIG.2

_FIG. 3._

0043111

FIG.4

FIG.5

FIG. 6.

FIG. 7

7/7

20  20A  60  26A  26  18  18A  62  24A  24  16  16A  28  22A  22